# EUROPEAN PATENT SPECIFICATION

(11) **EP 0 320 492 B1**
(45) Date of publication and mention of the grant of the patent: **17.11.1994**
(21) Application number: 89101031.6
(22) Date of filing: 17.08.1984
(51) Int. Cl.: G11B 23/033

(54) **Recording disc cartridge**
Aufnahme-Plattenkassette
Cassette à disque d'enregistrement

(30) Priority: 24.08.1983 JP 155233/83
(43) Date of publication of application: 14.06.1989
(62) Divisional of application: 84109820.5
(73) Proprietor: Hitachi Maxell Ltd., Osaka-fu (JP); Mitsumi Electric Company Ltd., Chofu-shi Tokyo (JP)
(72) Inventor: Kato, Yoshitake c/o Hitachi Maxell, Ltd., Yuki-gun Ibaragi (JP); Naoi, Mitsuaki, Tokyo (JP)
(74) Representative: Selting, Günther, Dipl.-Ing.

(56) References cited:
- EP-A- 0 079 110
- GB-A- 2 082 371
- GB-A- 2 110 462

## Description

### Field of the Invention

The present invention relates to a recording disc cartridge having a magnetic recording disc or an optical recording disc enclosed in a disc case.

### Background of the Invention

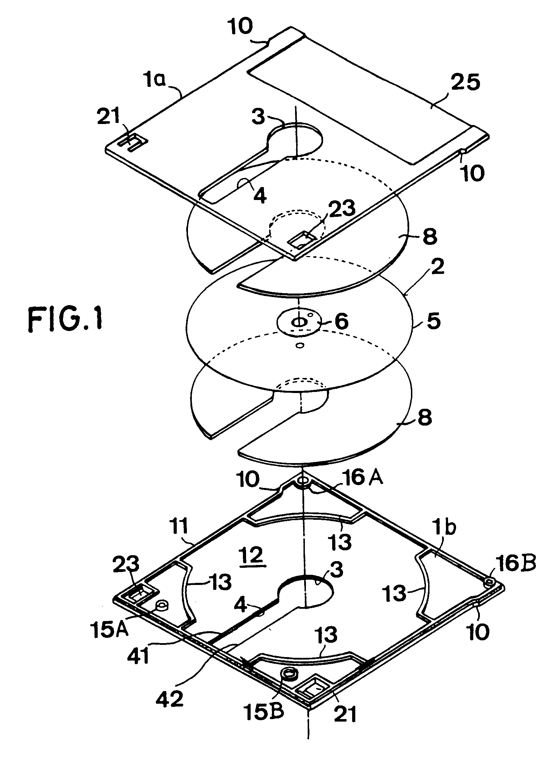

Fig. 1 shows a recording disc cartridge having a disc case 1 and a recording disc 2 rotatably enclosed in the disc case 1. In the recording disc cartridge of the above type, the disc case 1 is formed by a top half case 1a and a bottom half case 1b both of which are combined together by a tapping screws or by an ultrasonic welding method. In the conventional recording disc cartridge, the top section 1a and the bottom section 1b are not shaped completely same although they have almost similar shape partly because they are fitted together by engagement of projected walls formed on the peripheral part of one of the half cases with recesses defined on another half case corresponding to the projected walls and partly because the detection notches on the both half cases are defined out of the center line of the disc case. Therefore in the manufacturing process, two kinds of molds must be independently provided for the both half cases and the top half case and the bottom half case are independently molded and in turn each top half case and each bottom half case thus formed must be assembled together one by one, thereby resulting in complicated works of assembling with expensive production cost in addition to a troublesome production control.

EP-A-79 110 discloses a disc cartridge having the features recited in the preamble of claim 1 an in particular wherein in which the drive shaft insertion hole and the head insertion hole are communicated together. Accordingly, the mechanical strength of the cartridge case is weak and the cartridge case is easily deformed at the respective holes.

From GB-A-2 082 371, a recording disc cartridge is known wherein the head insertion openings of both half cases are separated from the drive shaft insertion holes by wall portions of the half cases. Each half case has on its inner surface arcuate ribs extending concentrically with respect to the drive shaft insertion hole, said ribs extending from the upper and lower half case and having no communication with the peripheral walls of said half cases. The ribs act to mechanically reinforce the cartridge which is flat and is easily deformable by even small external forces. The ribs an each half case are positioned equidistantly around the drive shaft insertion hole but they are not situated symmetrically with respect to the center line of the head insertion opening.

GB-A- 2 110 462 discloses a disc cartridge composed of two half cases having ribs formed on their inner surface and wherein one of the ribs is an one end thereof of integrally communicated with said peripheral walls.

The essential object of the present invention is to provide a recording disc cartridge wherein the shaft insertion hole and the head insertion opening are communicated together and which, nevertheless, has a high stability and strength.

The recording disc cartridge of the invention has the features of claim 1.

Embodiments of the invention are described hereunder in more detail with reference to the drawings in which
Fig. 1 is an exploded view showing one embodiment of a recording disc cartridge according to the present invention,
Fig. 2 is a top plan view showing a half section of the recording disc cartridge according to the present invention,
Fig. 3 is a cross sectional view taken along the lines A-A in Fig. 2,
Fig. 4 is a cross sectional view taken along the lines B-B in Fig. 2,
Fig. 5 is a cross sectional view taken along the lines C-C in Fig. 2,
Fig. 6 is a partial enlarged side view in which two half sections are assembled together,
Fig. 7 is a cross sectional view of a recording disc cartridge formed by assembling the two half sections shown in Fig. 2 with the cross section taken along the lines A-A in Fig. 2,
Fig. 8 is a plan view showing inside of a second example of a half section of the recording disc cartridge according to the present invention,
Fig. 9 is a partial plan view a plan view showing another example of a half section of the recording disc cartridge according to the present invention, and
Fig. 10 is a partial cross sectional view showing an essential portion of securing two half sections used in the recording disc cartridge according to the present invention.

### Detailed Description of the Preferred Embodiments

Before the description proceeds, it is noted that like parts are designated by like reference numerals throughout the attached drawings.

Referring to Figs. 1 to 7, the recording disc cartridge of the first embodiment of the present invention comprises the disc case 1 having a generally flat rectangular shape in plan view and the magnetic or optical recording disc 2 rotatably accommodated in the disc case 1. The disc case 1 is composed of the top half case 1a and the bottom half case 1b each made of plastic resin, and formed generally in the flat plate with the four peripheral sides surrounded by low vertical peripheral walls 11. The top half case 1a and the bottom half case 1b are assembled together with the bottom face of the peripheral walls 11 of the top half case 1a abutted to the corresponding top face of the peripheral walls 11 of the bottom case 1b so as to provide a flat space for accommodation of the recording disc 2. On the central portion of the both top and bottom half cases 1a and 1b, there are defined a pair of drive shaft insertion holes 3 through the both half cases with a pair of elongated head insertion holes 4 defined extending from the drive shaft insertion holes toward the front portion of the disc case 1.

The recording disc 2 is formed by a magnetic recording sheet 5 of an annular shape and a hub 6 fixed on the central part of the recording sheet 5 with the top end face and the bottom end face of the hub faced to the drive shaft insertion holes 3. Upon mounting of the recording disc cartridge on a disc drive apparatus, the recording disc 2 can be rotated by rotation of the disc drive members of the disc drive apparatus clamping the hub 6, so that the recording disc 2 slidingly rotates on the cleaning sheets 8 of non woven sheet laid on the inner surfaces of the top and bottom half cases 1a and 1b.

In the recording disc cartridge as mentioned above, the present invention is characterized in that the top half case 1a and the bottom half case 1b have a completely same shape.

The rear portions of the top half case 1a and the bottom half case 1b are provided with a pair of projected portions 10 expanded symmetrically in the right and left directions and the rear portion of the half case is wider than the front portion of the half case for preventing an erroneous mounting of the disc case 1 on the disc drive apparatus with the front side of the disc case wrongly taken as the rear side thereof.

The peripheral walls 11 are formed on the respective peripheral edges of the top half case 1a and the bottom half case 1b and four arcuated partition walls 13 are formed conforming to the outermost circle of the recording disc 2 at the respective corner portions of the disc case 1 so as to provide a disc receiving chamber 12. The lower faces of the respective walls 11 and 13 of the top half case 1a are contacted with the upper faces of the walls 11 and 13 of the bottom half case 1b upon assembling of the both halves.

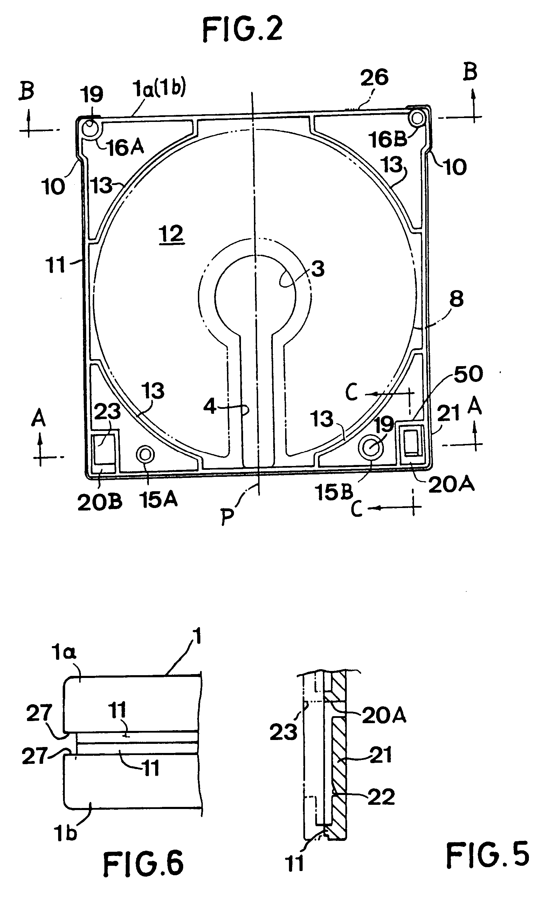

In the respective half cases 1a and 1b, each of the drive insertion holes 3 is piercingly defined in an annular shape at the central portion of the disc receiving chamber 12 with the head insertion hole 4 communicating with the drive shaft insertion hole 3 so as to extend toward the front portion of the disc case 1 in connection with the center of the lateral direction or left and right direction of the disc case 1. The peripheral edges 41 and 42 defining the head insertion hole 4 run parallelly with an equal distance to the phantom line P (see Fig.2) running in the longitudinal direction of the disc case 1 passing the center of the drive shaft insertion hole 3 and perpendicularly intersecting with the front edge of the disc case 1. Since the head insertion hole 4 is communicated with the drive shaft insertion hole 3 and extending up to the inner edge of the peripheral wall 11, a possible stroke of the head of the disc drive apparatus can be expanded so that the recording capacity of the disc cartridge can be increased. The center of the drive shaft insertion hole 3 must be coincided with the center relative to the lateral direction of the disc case but it is not essential to define the center of the drive shaft insertion hole 3 at the center relative to the longitudinal direction of the disc case 1.

A plurality of connecting bosses 15A, 15B, 16A and 16B are projectingly formed on the inner surface of each of the halves 1a and 1b for connecting the top half case 1a and the bottom half case 1b. The bosses 15A and 15B situated at the rear portion of the disc case make one pair and the bosses 16A and 16B make another pair.

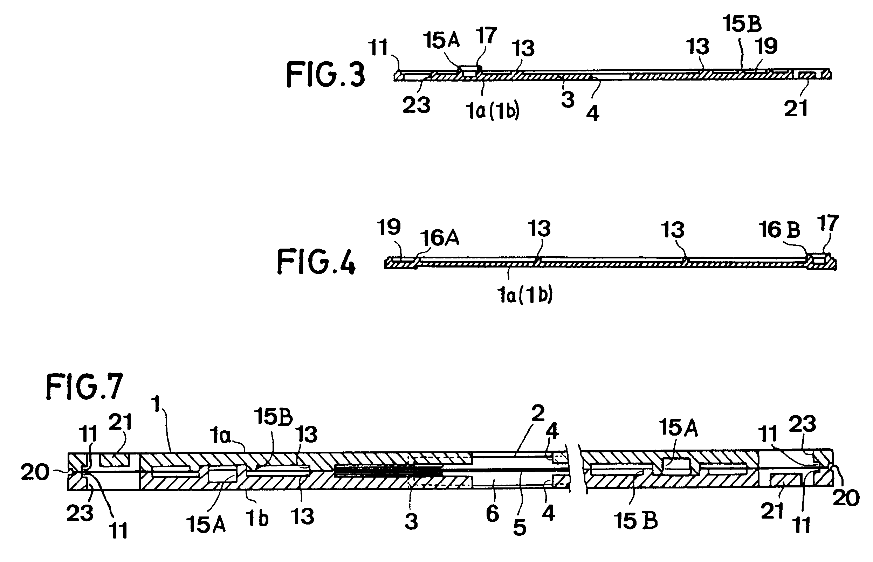

Referring to Figs. 2 and 3, the left connecting boss 15A is a cylindrical column having a funnel shaped opening 17 at the top end portion and is taller than the top butting face of the peripheral wall 11 of the top half case 1a (or 1B). The right connecting boss 15B has a hole 19 engageable with the boss 15A of the other half case with a height equal to the top level of the peripheral wall 11. The connecting bosses 15A and 15B are disposed at the symmetrical position relative to the phantom line P.

Referring to Figs. 2 and 4, the connecting bosses 16A and 16B are disposed at the symmetrical position relative to the phantom line P similar to the connecting bosses 15A and 15B, and the connecting boss 16A has the same configuration of the connecting boss 15B having the hole 19 and the connecting boss 16B is formed in the same manner as the shape of the connecting boss 15A having the funnel shaped opening 17. It is noted that the connecting bosses 15A and 15B on the front side of the both top halves 1a and 1b are closely fitted, to the contrary, the connecting bosses 16A and 16B are loosely fitted.

A partition wall 50 is provided at the corner where the connecting boss 15B exists so as to provide a small chamber 20, wherein an erase preventing chip 21 is formed by cutting the part of the half section in a U character shape. A shallow slot 22 is formed at the root of the chip 21 so as to facilitate to manually separate the chip 21 from the half case for preventing erase of the record.

In Fig. 1, a shallow rectangular recess 25 is formed on the top face of the top half case 1a for fitting a label and in Fig. 2, reference numeral 26 denotes a gate for injection of plastic resin when injection molding.

The top half case 1a and the bottom half case 1b are assembled together in such a manner as described below.

The cleaning liners 8 are laid in the inner surfaces of the disc receiving chamber 12 with the opening of the cleaning sheet 8 coincided with the head insertion hole 4 and then secured by a thermal welding or a supersonic welding or adhering material. Subsequently the recording disc 2 is put on the disc receiving chamber 12 of the bottom half case 1b with the hub 6 opposed to the drive shaft insertion hole 3. Then the top half case 1a to which the cleaning sheet was already secured is assembled to the bottom half case 1b fitting the connecting bosses 15A and 15B situated at the front portion of the both halves 1a and 1b, thereby positioning between the both halves 1a and 1b is made, and in turn the connecting bosses 16A and 16B situated at the rear portion of the both halves 1a and 1b are fitted.

It is appreciated that according to the present invention, since the connecting bosses 15A, 15B, 16A and 16B are disposed symmetrically relative to the phantom center line P and the peripheral walls 11 and the partition walls 13 are also in the same relation, two half cases having an exactly same configuration can be used for the top case half 1a and the bottom case half 1b for forming the case body 1.

Since the connecting bosses 16A and 16B on the rear portion of the both halves 1a and 1b are fitted looser than the fitting between the connecting bosses 15A and 15B on the both halves 1a and 1b, in addition to the manner of engagement between the connecting bosses 16A and 16B on the rear portion of the both halves 1a and 1b is inverse of the manner of engagement between the connecting bosses 15A and 15B on the front portion, the top half case 1a and the bottom half case 1b can be smoothly assembled with a high accuracy preventing an erroneous assembling in such a manner that the two half cases are assembled in a reversed manner.

By assembling the top half case 1a and the bottom half case 1b as described above, the top faces of the peripheral walls 11 and the partition walls 13 of the bottom section 1b closely contact onto the bottom faces of those in the top section 1a and the ends of the connecting bosses 15A and 16B of the top half case 1a contact onto the bottom faces of the holes 19 of the connecting bosses 15B and 16A of the bottom half case 1b, then the both halves can be securedly connected by the ultrasonic welding method. Since there are formed the funnel shaped openings 17 on the end portion of the connecting bosses 15A and 16B, the welding can be well performed. In welding, if there is a partly butting portion on the ends of the walls 11 and 13, there may occur flash. To prevent this, the peripheral walls 11 are formed with the inner part thereof high and the outer part thereof to be downwardly stepped as shown by 27 in Fig. 6 so as to prevent the occurrence of the flash whereby the both halves 1a and 1b can be secured between the butting faces of the peripheral walls 11.

Said stepped portions 27 may be formed on the left and right peripheral walls, the front peripheral wall and the part of the rear peripheral wall adjacent to the connecting bosses 16A and 16B as shown in Fig. 2. However, such stepped portion 27 may be formed only the four corners of the both halves adjacent to the connecting bosses.

The accuracy of the engagement of the connecting bosses 15A, 15B, 16A and 16B may be same. In this case, the top half case 1a should be assembled to the bottom half case 1b from right above.

In the embodiment as described above, the distance between the two connecting bosses 15A and 15B in the front portion is different from the distance between the connecting bosses 16A and 16B for preventing erroneous assembling of the both halves 1a and 1b, however, the value of the distance is not limited to the distance shown in this embodiment.

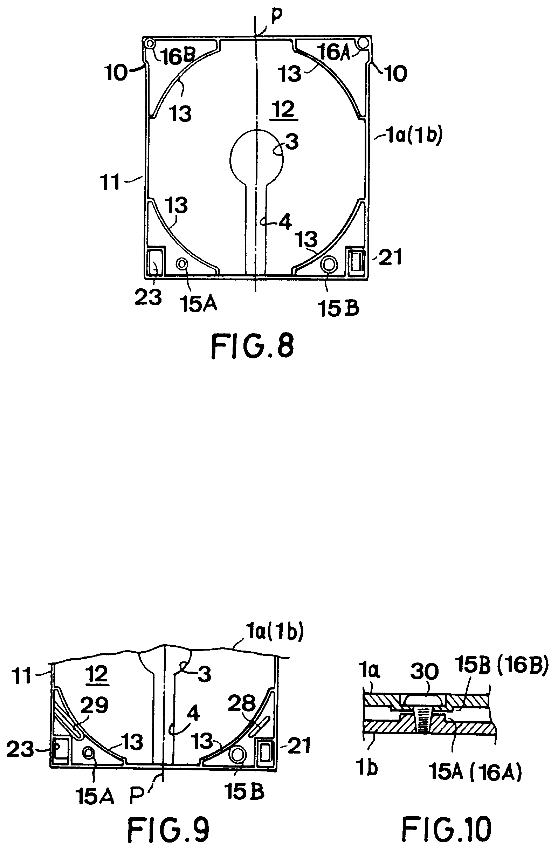

The relation of the engagement of the connecting bosses 16A and 16B on the rear portion of the half cases 1a and 1b may be the same as the relation of the engagement between the connecting bosses 15A and 15B as shown in Fig. 8so far as the engagement of the connecting bosses is performed by the engagement between the projection and the recess.

Furthermore, as shown in Fig. 9, there may be formed a rib like positioning projection 28 and a positioning slot 29 for engagement of the projection 28, so as to assure the correct positioning of the top half case 1a and the bottom half case 1b. In a case where such projection and slot are formed for the positioning, the connecting bosses 15A, 15B, 16A and 16B may be provided only for connecting the top half case 1a and the bottom half case 1b by only abutting the ends of the respective connecting bosses without the fitting engagement.

Furthermore, as shown in Fig. 10, the connecting bosses 15A through 16B on one of the half cases ( for example 1a ) are provided with through holes and the connecting bosses on the other half case ( for example 1b ) are formed screw holes so that the both half cases 1a and 1b can be connected by tapping screws tapped into the screw holes through the through holes.

The present invention can be applied to optical recording disc cartridges and/or recording disc cartridges having shutter means for open and close the head insertion hole 4.

It is appreciated that the recording disc cartridge according to the present invention can be manufactured by the same mold for the top half case and the bottom half case since they have symmetrical configuration, thereby resulting in reducing the manufacturing cost.

It is also appreciated that in manufacturing the recording disc cartridge according to the present invention, the manufacturing process schedule can be simplified by commonly using only one kind of the half case for the top half case and the bottom half case.

## Claims

1. A recording disc cartridge which comprises a recording sheet (2) having a hub (6) in its central portion, and a disc case (1) composed of a top half case (1a) and a bottom half case (1b) combined to the top half case, each half case having peripheral walls (11) and being provided with a drive shaft insertion hole (3) defined in the central portion of the disc case for driving a recording disc (2) accommodated in the disc case, and a head insertion opening (4) extending from the central portion of the disc case towards the frontward direction and penetrating the top half case and the bottom half case when both half cases are combined together, said drive shaft insertion hole (3) and the head insertion opening (4) in each half case being communicated together,
**characterized in that**
the head insertion opening (4) is intersected by the corresponding peripheral wall (11) at the front edge of the disc case (1),
each half case is provided with four arcuate partition walls (13) in the inside of the half case for providing a disc receiving chamber (12) in the disc case, said partition walls (13) being, on both ends thereof, integrally communicated with said peripheral walls (11),
and the partition walls (13) situated on both sides of the head insertion opening (4) are positioned symmetrically with respect to the center line (P) of the head insertion opening (4).

2. The recording disc cartridge of claim 1, wherein said drive shaft insertion hole (3) and the head insertion opening (4) in each half case are shaped as a key hole having a round portion and an elongated portion, the diameter of said hub (6) engaged in the drive shaft insertion hole (3) being larger than the width of the head insertion opening (4).

## Patentansprüche

1. Aufzeichnungsplattenkassette, mit einer Aufzeichnungsscheibe (2) mit einer Nabe (6) in ihrem mittleren Bereich und einem aus einer oberen Gehäusehälfte (1a) und einer mit der oberen Gehäusehälfte zusammengesetzten unteren Gehäusehälfte (1b) bestehenden Plattengehäuse (1), wobei jede Gehäusehälfte Umfangswände (11) aufweist und mit einem in dem mittleren Bereich des Plattengehäuses ausgebildeten Antriebswelleneinführloch (3) zum Antreiben einer in dem Plattengehäuse untergebrachten Aufzeichnungsplatte (2) versehen ist, und einer Kopfeinführöffnung (4), die sich von dem mittleren Bereich des Plattengehäuses nach vorne erstreckt und die obere Gehäusehälfte und die untere Gehäusehälfte durchdringt, wenn beide Gehäusehälften zusammengesetzt sind, wobei das Antriebswelleneinführloch (3) und die Kopfeinführöffnung (4) in jeder Gehäusehälfte ineinander übergehen,
**dadurch gekennzeichnet, daß**
die Kopfeinführöffnung (4) von der entsprechenden Umfangswand (11) am Vorderrand des Plattengehäuses (1) geschnitten wird,
jede Gehäusehälfte im Inneren der Gehäusehälfte mit vier bogenförmigen Trennwänden (13) versehen ist, um in dem Plattengehäuse eine Plattenaufnahmekammer (12) zu bilden, wobei die Trennwände (13) an ihren beiden Enden einstückig mit den Umfangswänden (11) verbunden sind,
und die auf beiden Seiten der Kopfeinführöffnung (4) angeordneten Trennwände (13) in bezug auf die Mittellinie (P) der Kopfeinführöffnung (4) symmetrisch angeordnet sind.

2. Aufzeichnungsplattenkassette nach Anspruch 1, bei der das Antriebswelleneinführloch (3) und die Kopfeinführöffnung (4) in jeder Gehäusehälfte als Schlüsselloch mit einem runden Bereich und einem länglichen Bereich gestaltet sind, wobei der Durchmesser der in dem Antriebswelleneinführloch (3) in Eingriff befindlichen Nabe (6) größer als die Breite der Kopfeinführöffnung (4) ist.

## Revendications

1. Cartouche de disque d'enregistrement qui comporte une feuille d'enregistrement (2) ayant un moyeu (6) dans sa partie centrale, et un boîtier de disque (1) composé d'une moitié de boîtier supérieure (la) et d'une moitié de boîtier inférieure (lb) combinée avec la moitié de boîtier supérieure, chaque moitié de boîtier ayant des parois périphériques (11) et étant pourvue d'un trou d'insertion d'arbre d'entraînement (3) défini dans la partie centrale du boîtier de disque afin d'entraîner un disque d'enregistrement (2) logé dans le boîtier de disque, et d'une ouverture d'insertion de tête (4) s'étendant depuis la partie centrale du boîtier de disque en direction de l'avant et traversant la moitié de boîtier supérieure et la moitié de boîtier inférieure lorsque les deux moitiés de boîtier sont combinées, ledit trou d'insertion d'arbre d'entraînement (3) et l'ouverture d'insertion de tête (4) dans chaque moitié de boîtier communiquant l'un avec l'autre,
caractérisée en ce que
l'ouverture d'insertion de tête (4) est coupée par la paroi périphérique (11) correspondante au niveau du bord avant du boîtier de disque (1),
chaque moitié de boîtier est pourvue de quatre parois de séparation courbes (13) à l'intérieur de la moitié de boîtier afin de procurer une chambre de réception de disque (12) dans le boîtier de disque, lesdites parois de séparation (13) étant, aux deux extrémités de celles-ci, en communication avec lesdites parois périphériques (11),
et les parois de séparation (13) situées des deux côtés de l'ouverture d'insertion de tête (4) sont positionnées de manière symétrique par rapport à l'axe (P) de l'ouverture d'insertion de tête (4).

2. Cartouche de disque d'enregistrement selon la revendication 1, dans laquelle ledit trou d'insertion d'arbre d'entraînement (3) et l'ouverture d'insertion de tête (4) dans chaque moitié de boîtier sont en forme de trou de serrure avec une partie ronde et une partie allongée, le diamètre dudit moyeu (6) engagé dans le trou d'insertion d'arbre d'entraînement (3) étant plus grand que la largeur de l'ouverture d'insertion de tête (4).
